Europäisches Patentamt

European Patent Office

Office européen des brevets

(19)

(11) Numéro de publication : **0 448 415 B1**

(12) **FASCICULE DE BREVET EUROPEEN**

(45) Date de publication du fascicule du brevet :
**24.08.94 Bulletin 94/34**

(51) Int. Cl.$^5$ : **G01D 5/34, G01D 5/26**

(21) Numéro de dépôt : **91400050.0**

(22) Date de dépôt : **11.01.91**

(54) **Dispositif de détection à distance d'une grandeur physique, fonctionnant en réflexion.**

(30) Priorité : **12.01.90 FR 9000317**

(43) Date de publication de la demande :
**25.09.91 Bulletin 91/39**

(45) Mention de la délivrance du brevet :
**24.08.94 Bulletin 94/34**

(84) Etats contractants désignés :
**AT BE CH DE DK ES FR GB GR IT LI LU NL SE**

(56) Documents cités :
**EP-A- 0 130 337**
**WO-A-88/04065**
**DE-A- 3 020 454**
**FR-A- 2 595 820**
**PATENT ABSTRACTS OF JAPAN, vol. 7, no. 212 (P-224)[1357], 20 septembre 1983; & JP-A-58 106 413**

(73) Titulaire : **BERTIN & CIE**
**Zone Industrielle**
**Boîte postale 3**
**F-78373 Plaisir Cédex (FR)**

(72) Inventeur : **Lequime, Michel**
**6, Rue des Sauries**
**F-13510 Eguilles (FR)**

(74) Mandataire : **Ramey, Daniel et al**
**Cabinet Ores**
**6 Avenue de Messine**
**F-75008 Paris (FR)**

## Description

L'invention concerne un dispositif de mesure à distance d'une grandeur physique, du type fonctionnant en réflexion, comprenant une source de lumière incohérente reliée par une fibre optique à un capteur à élément sensible biréfringent soumis à la grandeur à mesurer et dans lequel la lumière subit une modulation périodique de son spectre.

De tels capteurs sont déjà connus (brevet français 2.595.820 de la demanderesse) et utilisés pour la mesure à distance de grandeurs physiques telles que la température, un champ magnétique, une position, un déplacement, etc...

Dans ces capteurs, l'extrémité de la fibre optique est placée au foyer d'une lentille de collimation dont l'axe optique est en regard de l'élément sensible. Lorsque le capteur est du type fonctionnant par transmission, l'élément sensible est précédé d'un polariseur et suivi d'un analyseur et une seconde lentille de collimation le relie à une fibre optique menant à un appareil d'analyse spectrale de la lumière.

Lorsque le capteur fonctionne en réflexion, l'élément sensible est toujours précédé d'un polariseur, mais est suivi d'un miroir qui réfléchit le flux lumineux reçu et le refait passer à travers l'élément sensible, le polariseur et la lentille de collimation pour le renvoyer dans la fibre optique, en direction d'un appareil d'analyse spectrale relié à cette fibre par un coupleur en Y.

En raison des très faibles dimensions du coeur de la fibre optique, le miroir de réflexion doit être orienté perpendiculairement à l'axe optique du dispositif avec une très grande précision, pour renvoyer un flux lumineux maximum à l'intérieur de la fibre optique. Par exemple, si l'on veut obtenir une perte de réinsertion de lumière inférieure à 1 dB dans la fibre optique, il faut que l'angle de la perpendiculaire au miroir et de l'axe optique du dispositif soit inférieur à 3 minutes d'angle, lorsque le diamètre de coeur de la fibre optique est de l'ordre de 0,1 mm et que la distance focale de la lentille de collimation est de 10 mm.

Une telle précision dans le positionnement du miroir est difficile à réaliser et à conserver dans le temps.

Pour éviter cet inconvénient, les solutions classiques consistent à augmenter le diamètre de coeur de la fibre optique, ou à réduire la distance focale de l'optique de collimation. Il est toutefois difficile de diminuer la distance focale en dessous de 1 mm, et d'utiliser des fibres optiques dont le diamètre de coeur est supérieur à 0,2 mm. En outre, il en résulte une très forte divergence du faisceau lumineux collimaté, ce qui se traduit également par une perte de flux lumineux sensible lorsque la distance lentille de collimation-miroir devient grande par rapport à la distance focale.

Une autre solution classique consiste à défocaliser la fibre optique par rapport à la lentille de collimation. Il en résulte cependant une perte importante de réinsertion du flux lumineux dans la fibre optique, fonction de cette défocalisation et pouvant être de l'ordre de 5 à 10 dB.

Il est connu, par le document EP-A-0 130 337, d'utiliser un rétroréflecteur à microbilles ou à microprismes pour réinjecter un flux lumineux dans une fibre optique, en évitant un positionnement très précis du rétroréflecteur par rapport à la fibre optique. Toutefois, un tel moyen ne peut être utilisé tel quel lorsque la fibre optique est reliée à un capteur à codage de modulation spectrale, car le rétroréflecteur a pour effet de perturber la modulation périodique spectrale du flux lumineux réinjecté dans la fibre optique.

L'invention a pour but d'apporter une solution simple, efficace et fiable à ce problème, tout en garantissant une perte minimale de réinsertion.

Elle a également pour but d'augmenter les performances d'un capteur du type précité.

Elle propose à cet effet un dispositif de mesure à distance d'une grandeur physique, fonctionnant en réflexion et utilisant le principe du codage par modulation spectrale de la lumière, comprenant une source de lumière incohérente reliée par une fibre optique à un capteur à élément sensible biréfringent soumis à la grandeur mesurée et dans lequel la lumière subit une modulation périodique de son spectre, une lentille de collimation et un polariseur étant agencés entre la fibre optique et l'élément sensible du capteur, tandis qu'un moyen de réflexion optique est prévu à l'extrémité opposée du capteur, caractérisé en ce que le moyen de réflexion optique est du type catadioptrique dans lequel la direction de réflexion est parallèle à la direction d'incidence, et en ce qu'un second polariseur est placé entre le capteur et le moyen de réflexion, les directions passantes des deux polariseurs étant de préférence croisées ou parallèles et orientées à 45° des axes neutres de l'élément sensible du capteur.

L'utilisation d'un réflecteur catadioptrique permet une réinsertion maximale du flux lumineux dans la fibre optique. Cependant, la réflexion totale du flux lumineux sur les faces de catadioptre se traduit par une perturbation parasite et délicate à calibrer de la modulation périodique induite par le capteur dans le spectre du flux lumineux émis par la source. La présence du second polariseur, interposé entre le réflecteur et l'élément sensible, permet d'isoler le réflecteur du phénomène d'interférences qui prend naissance dans l'élément sensible et de mettre en série les transmittances spectrales associées aux traversées aller et retour de l'élément sensible, sans pertes additionnelles importantes.

L'amplitude utile de modulation du flux lumineux n'est sensiblement pas modifiée par rapport à celle que l'on a dans un capteur classique fonctionnant en transmission, et le fond continu du signal est plus faible, ce qui revient à obtenir un indice de modulation plus élevé à la fréquence utile. La visibilité de la modulation à la fréquence utile est donc améliorée. En outre, la réinsertion du flux lumineux dans la fibre optique ne pose pas de problèmes et peut s'obtenir et se conserver facilement dans le temps.

Selon un premier mode de réalisation de l'invention, le moyen de réflexion optique est constitué par un coin de cube dont le sommet est situé sur l'axe optique du capteur, du côté opposé à ce capteur.

On oriente les faces du coin de cube par rapport au second polariseur, de façon à obtenir un flux lumineux maximum après la seconde traversée du second polariseur.

En variante, le moyen de réflexion optique peut être constitué par une lentille "SELFOC" P/4 ou 3P/4 à face arrière métallisée.

Selon un mode de réalisation préféré de l'invention, la lentille de collimation (de type "SELFOC"), les deux polariseurs, le capteur et le moyen de réflexion optique sont logés coaxialement dans un même boîtier ou gaine cylindrique, en matière métallique ou diélectrique, qui peut être constitué par un tube capillaire par exemple.

On obtient ainsi un capteur très simple, très maniable, de très faibles dimensions (ayant un diamètre extérieur de l'ordre de 2 à 4 mm, selon les réalisations), et de construction aisée.

L'invention sera mieux comprise et d'autres détails, caractéristiques et avantages de celle-ci apparaîtront plus clairement à la lecture de la description qui suit, faite à titre d'exemple en référence aux dessins annexés dans lesquels:

la figure 1 représente schématiquement un capteur à réflexion de la technique antérieure;

la figure 2 représente schématiquement un capteur à réflexion selon l'invention;

les figures 3 et 4 sont des vues schématiques en coupe axiale de deux modes de réalisation possibles de l'invention.

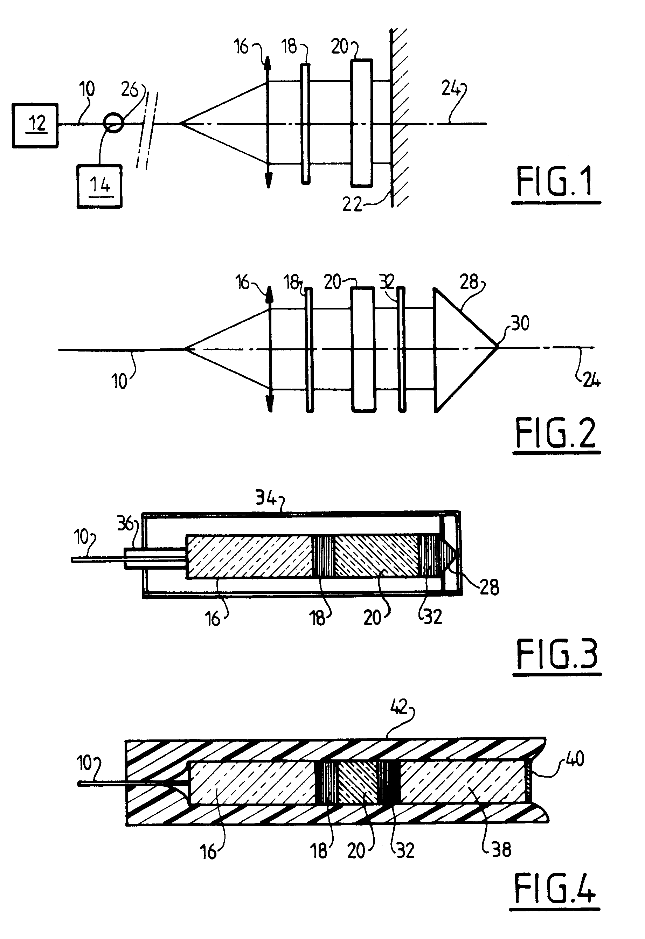

On se réfère d'abord à la figure 1, qui représente schématiquement un capteur de la technique antérieure, fonctionnant en réflexion et comprenant une fibre optique multimode 10 montée entre une source 12 de lumière incohérente et un capteur comprenant une lentille 16 de collimation, un polariseur 18, un cristal biréfringent 20 soumis à la grandeur mesurée (par exemple la température) et un miroir plan 22 à réflexion totale qui est orienté perpendiculairement à l'axe optique 24 du dispositif.

Un coupleur en Y 26 relie la fibre optique 10 à un appareil 14 d'analyse spectrale de la lumière (tel par exemple qu'un interféromètre démodulateur).

Le fonctionnement de ce type de capteur est le suivant:

la lumière émise par la source 12 est transmise par la fibre optique 10 au capteur, polarisée de façon rectiligne à la traversée du polariseur 18, et transmise au cristal 20 en étant polarisée dans un plan qui est incliné par rapport aux axes lent et rapide du cristal 20. De manière préférentielle, cette inclinaison est de 45°. A la traversée du cristal, le flux lumineux se divise en deux ondes polarisées dans des plans perpendiculaires et se déplaçant à des vitesses différentes, de telle sorte que ces deux ondes sont déphasées dans le temps à la sortie du cristal. Le flux lumineux sortant du cristal est réfléchi par le miroir 22, retraverse le cristal 20, puis le polariseur 18 et est réinséré dans la fibre optique 10 par la lentille de collimation 16. Ce flux lumineux est finalement transmis à l'appareil 14 d'analyse spectrale.

A la sortie du capteur, la répartition spectrale du flux lumineux est modulée à une fréquence qui est fonction de la différence de marche dans le capteur, celle-ci variant elle-même en fonction de la grandeur physique à laquelle est sensible le cristal 20.

La mesure de cette différence de marche permet donc de déterminer la valeur de la grandeur physique agissant sur le cristal 20, moyennant un étalonnage préalable.

Cependant, et comme indiqué plus haut, il faut que le miroir 22 soit orienté perpendiculairement à l'axe optique 24 avec une très grande précision, tout écart se traduisant par une diminution très importante du flux lumineux transmis à l'appareil 14 d'analyse spectrale.

Si on désigne par $\underline{f}$ la distance focale de la lentille 16, par $\underline{r}$ le rayon de coeur de la fibre optique et $\underline{a}$ l'angle entre l'axe optique 24 et la perpendiculaire au miroir 22, l'efficacité de la réinsertion du flux lumineux dans la fibre optique 10 après réflexion par le miroir 22 se traduit par la relation suivante:

$$T = \frac{2}{\pi}(\theta - \cos\theta . \sin\theta) \text{ avec } r.\cos\theta = f.a$$

Une perte de réinsertion inférieure à 1 dB se traduit par un angle $\underline{a}$ inférieur à 3 minutes d'angle, si la distance focale $\underline{f}$ vaut 10 mm et si le rayon de coeur de la fibre optique est de 0,05 mm.

Cette précision est très difficile à obtenir et à conserver dans le temps, et un défaut d'orientation du miroir par rapport à l'axe optique du dispositif peut se traduire par une perte d'information au niveau de l'appareil 14 d'analyse spectrale.

Le dispositif selon l'invention, représenté schématiquement en figure 2, permet d'éviter ces inconvénients.

EP 0 448 415 B1

On retrouve dans ce dispositif, en bout de la fibre optique 10, un capteur comprenant la lentille de collimation 16, le polariseur 18, le cristal biréfringent 20 sensible à la grandeur physique à mesurer, qui sont les mêmes que dans le capteur de la figure 1.

Selon l'invention, le miroir 22 est remplacé par un réflecteur catadioptrique, dans lequel la direction de réflexion de la lumière est toujours parallèle à la direction d'incidence.

Dans l'exemple de réalisation de la figure 2, ce réflecteur est constitué par un coin de cube 28 à réflexion totale, dont le sommet 30 se trouve sur l'axe optique 24 du dispositif et est orienté à l'opposé du capteur. En outre, un second polariseur 32 est interposé entre le cristal 20 et le réflecteur 28, ce second polariseur ayant une direction passante parallèle ou perpendiculaire à celle du premier polariseur 18 et donc orientée de préférence à 45° des axes lent et rapide du cristal 20.

L'orientation relative du second polariseur 32 et des faces du coin de cube 28 est déterminée pour que le flux lumineux transmis après réflexion sur le coin de cube 28 et traversée du second polariseur 32, soit maximum (déphasage à la réflexion minimal).

Ce dispositif fonctionne de la façon suivante:

la fibre optique 10 délivre un flux lumineux non polarisé ayant une distribution spectrale $P_0(\sigma)$.

Après traversée du premier polariseur 18, ce flux devient $\frac{1}{2}P_0(\sigma)$.

Après traversée du cristal 20 et du second polariseur 32, la distribution spectrale du flux polarisé est la suivante:

$$P_1(\sigma) = \frac{1}{4} P_0(\sigma) [1 + \cos 2\pi\sigma\Delta] \text{ avec } \Delta = e(n_e - n_o)$$

$\underline{e}$ désignant l'épaisseur du cristal 20, $n_e$ et $n_o$ étant les indices du cristal 20 selon ses axes rapide et lent respectivement.

Le flux lumineux qui traverse le coin de cube 28 et est réfléchi par les faces de celui-ci est polarisé elliptiquement, l'orientation et l'ellipticité de cette polarisation étant quasiment indépendantes de la longueur d'onde.

La seconde traversée du polariseur 32 se traduit par une projection de cet état de polarisation elliptique sur la direction passante du polariseur 32, ce qui conduit à une répartition spectrale du type suivant:

$$P'_1(\sigma) = \frac{1}{4} P_0(\sigma) \cos^2\delta [1 + \cos 2\pi\sigma\Delta]$$

où $\delta$ est faible et indépendant de la longueur d'onde. Une orientation convenable du coin de cube 28 par rapport au second polariseur 32 permet d'obtenir une valeur de $\cos\delta$ voisine de 1.

Après la seconde traversée du capteur 20, on a la répartition finale suivante du flux lumineux:

$$P_2(\sigma) = \frac{1}{8} P_0(\sigma) \cos^2\delta [1 + \cos 2\pi\sigma\Delta]^2$$

$$= \frac{3}{16} \cos^2\delta P_0(\sigma) [1 + \frac{4}{3}\cos 2\pi\sigma\Delta + \frac{1}{3}\cos 4\pi\sigma\Delta]$$

A titre de comparaison, on obtiendrait, à la sortie du capteur de la figure 1, la distribution suivante:

$$P'_2(\sigma) = \frac{1}{4}P_0(\sigma) [1 + \cos 4\pi\sigma\Delta]$$

Ce flux lumineux peut être ensuite dirigé vers un interféromètre de démodulation ayant une différence de marche $\Delta_0$ proche de $\Delta$, ce qui permet d'obtenir le signal S donné par la relation suivante:

$$S = \frac{3}{32} \cos^2\delta \; \tilde{P}_0(\Delta - \Delta_0) [1 + \frac{2}{3}\cos 2\pi\sigma_0(\Delta - \Delta 0)]$$

dans laquelle $\tilde{P}_0$ désigne la transformée de Fourier de $P_0$, et $\sigma_0$ désigne la longueur d'onde centrale de la source lumineuse.

Avec un capteur tel que celui de la figure 1, et un interféromètre démodulateur accordé sur la fréquence $2\Delta$, on obtiendrait le signal S' suivant:

$$S' = \frac{1}{8} \tilde{P}_0(2\Delta - \Delta_0) [1 + \frac{1}{2}\cos 2\pi\sigma_0(2\Delta - \Delta 0)]$$

4

La comparaison des signaux S et S′ montre que:

1°/ On obtient avec le dispositif selon l'invention une amplitude utile de modulation égale à:

$$\frac{1}{16} \; \overset{\sim}{P} \; (\Delta - \Delta 0) \cos^2 \delta \cos 2 \pi \sigma_0 (\Delta - \Delta_0)$$

Cette amplitude utile de modulation est identique à celle que l'on obtient dans le dispositif de la figure 1 lorsque le miroir 22 est parfaitement perpendiculaire à l'axe optique 24 (si l'on suppose $\cos^2 \delta$ égal à 1), ce qui signifie que le dispositif selon l'invention ne provoque pas de perte de flux lumineux utile à la réinsertion dans la fibre optique 10.

2°/ Le fond continu du signal est plus faible, ce qui correspond à un indice de modulation plus élevé à la fréquence utile (2/3 au lieu de 1/2) de sorte que l'on obtient une meilleure visibilité du phénomène d'interférence.

3°/ L'interféromètre démodulateur 14 comporte un cristal de même épaisseur que celui constituant l'élément sensible 20, étant donné que la fréquence utile est centrée sur $\Delta$ (et non sur $2\Delta$), l'interféromètre de détection fonctionnant habituellement en simple passage du flux lumineux.

4°/ Les contraintes de positionnement précis du moyen optique de réflexion sont supprimées, le seul alignement nécessaire étant celui du sommet 30 du coin de cube 28 qui doit être placé sur l'axe optique 24, ce réglage n'étant pas critique, non plus que l'orientation des faces du coin de cube.

5°/ On peut réaliser une détection additionnelle à la fréquence $2\Delta$ et disposer, en utilisant des techniques connues de multiplexage, de deux informations (on utilise deux cristaux d'accord dans l'interféromètre de détection, l'un centré sur $\Delta$ et l'autre sur $2\Delta$) . La mesure simultanée de ces deux informations permet de confirmer la détermination de la phase du signal et fournit un moyen intégré de recalibrage en permanence du dispositif de détection (notamment pour compenser les dérives éventuelles de la source en longueur d'onde).

Le coin de cube 28 peut être remplacé par tout autre élément réflecteur de type catadioptrique, dans lequel la direction des rayons lumineux réfléchis est toujours parallèle à celle des rayons lumineux incidents. On peut utiliser par exemple une lentille de marque "SELFOC" de type P/4 ou 3P/4 à face arrière métallisée, ou une lentille convergente avec un miroir plan situé dans son plan focal.

On peut également utiliser un coin de cube "vide", c'est-à-dire formé de trois faces planes et perpendiculaires entre elles, qui sont réfléchissantes ou métallisées intérieurement, ou un coin de cube plein, dont les trois faces perpendiculaires sont métallisées extérieurement.

Dans les figures 3 et 4, on a représenté à titre d'exemple deux modes de réalisation pratique du dispositif selon l'invention.

En figure 3, le dispositif comprend un boîtier métallique 34 de forme cylindrique, contenant une optique de collimation 16 constituée par une lentille "SELFOC", les deux polariseurs 18 et 32, le coin de cube 28 et un cristal de quartz 20 formant l'élément sensible du capteur. La fibre optique 10 est montée à l'intérieur d'une virole 36 à la traversée d'une extrémité du boîtier 34. La longueur de ce boîtier peut être de l'ordre de 30 à 40 mm, son diamètre de 4 mm.

En figure 4, une lentille "SELFOC" 16 formant l'optique de collimation, les deux polariseurs 18 et 32, l'élément sensible 20 en calcite, et une lentille "SELFOC" 38 à face arrière métallisée 40 sont montés à l'intérieur d'un tube capillaire 42 en verre. Le dispositif a un diamètre légèrement inférieur à 2 mm et une longueur de l'ordre de 10 mm.

L'invention prévoit également, pour réduire la composante continue à la démodulation, de déposer sur la fibre optique un traitement antireflet monocouche ou multicouche.

De façon générale, l'invention permet de résoudre, sans perte importante de flux lumineux, les problèmes d'assemblage et de montage des capteurs à codage de modulation spectrale fonctionnant en réflexion, et d'utiliser de tels capteurs pour des mesures déportées en milieu agressif (vibrations, chocs, dilatations) sans craindre des détériorations des performances par désalignement ou défocalisation.

## Revendications

1. Dispositif de mesure à distance d'une grandeur physique, fonctionnant en réflexion et utilisant le principe du codage par modulation spectrale de la lumière, comprenant une source (12) de lumière incohérente reliée par une fibre optique (10) à un capteur comprenant une lentille de collimation (16) et un polariseur (18) agencés entre la fibre optique et un élément (20) sensible biréfringent soumis à la grandeur à mesurer, et un moyen de réflexion optique prévu à l'extrémité du capteur opposée à la fibre (10), caractérisé en ce que le moyen de réflexion optique (28, 38, 40) est du type catadioptrique dans lequel la direction de réflexion est parallèle à la direction d'incidence, et en ce qu'un second polariseur (32) est placé entre l'élément sensible (20) et le moyen de réflexion (28, 38, 40), les orientations des deux polariseurs (18, 32) étant croisées ou parallèles.

2. Dispositif selon la revendication 1, caractérisé en ce que la direction passante du premier polariseur (18) est orientée à 45° des axes lent et rapide de l'élément sensible (20) du capteur.

3. Dispositif selon la revendication 1 ou 2, caractérisé en ce que le moyen de réflexion optique est constitué par un coin de cube (28) dont le sommet (30) est situé sur l'axe optique (24) du capteur, du côté opposé à ce capteur.

4. Dispositif selon la revendication 3, caractérisé en ce que les faces du coin de cube (28) sont orientées par rapport au second polariseur (32) de façon à obtenir un flux lumineux maximum après la seconde traversée du second polariseur (32).

5. Dispositif selon la revendication 3 ou 4, caractérisé en ce que le moyen de réflexion est un coin de cube vide formé de trois faces réfléchissantes ou métallisées intérieurement, ou un coin de cube plein dont les trois faces perpendiculaires sont métallisées extérieurement.

6. Dispositif selon la revendication 1 ou 2, caractérisé en ce que le moyen de réflexion est constitué d' une lentille convergente et d'un miroir plan situé dans son plan focal.

7. Dispositif selon la revendication 1 ou 2, caractérisé en ce que le moyen de réflexion est une lentille "SELFOC" (38) de type P/4 ou 3 P/4 à face arrière (40) métallisée.

8. Dispositif selon l'une des revendications précédentes, caractérisé en ce que la fibre optique (10) comprend un revêtement antireflet monocouche ou multi-couche.

9. Dispositif selon l'une des revendications précédentes, caractérisé en ce que la lentille de collimation (16), les polariseurs (18, 32), l'élément sensible (20) et le moyen de réflexion (28, 38) sont logés dans un boîtier (34) métallique ou une gaine cylindrique (42) en matière diélectrique, telle par exemple qu'un tube capillaire.

10. Dispositif selon l'une des revendications précédentes, caractérisé en ce qu'il est associé à un interféromètre démodulateur (14) accordé sur la fréquence de modulation (Δ) générée par le capteur et sur la fréquence double (2Δ), de manière à s'affranchir des éventuelles dérives de la longueur d'onde centrale de la source (12).

## Patentansprüche

1. Vorrichtung zum Messen einer physikalischen Größe aus der Entfernung auf Grundlage von Reflexion und unter Ausnutzung des Prinzips einer Codierung durch spektrale Modulation des Lichtes, welche aufweist: eine inkohärente Lichtquelle (12), die mittels einer optischen Faser (10) mit einem Sensor verbunden ist, der eine Kollimationslinse (16) und einen Polarisator (18) aufweist, die zwischen der optischen Faser und einem empfindlichen, der physikalischen Größe ausgesetzten doppelbrechenden Element (20) angeordnet sind, und ein optisches Reflexionsmittel, welches an dem der Faser (10) gegenüberliegenden Ende des Sensors angeordnet ist, **dadurch gekennzeichnet, daß** der Typ des optischen Reflexionsmittels (28, 38, 40) katadioptrisch ist, bei welchem die Reflexionsrichtung parallel zur Einfallsrichtung ausgerichtet ist, **und daß** zwischen dem empfindlichen Element (20) und dem Reflexionsmittel (28, 38, 40) ein zweiter Polarisator (32) angeordnet ist, wobei die zwei Polarisatoren (18, 32) gekreuzt oder parallel sind.

2. Vorrichtung nach Anspruch 1, **dadurch gekennzeichnet, daß** die Polarisationsrichtung des ersten Polarisators (18) bezüglich der ordentlichen und außerordentlichen Achsen des empfindlichen Elementes (20) des Sensors unter 45° ausgerichtet ist.

3. Vorrichtung nach Anspruch 1 oder 2, **dadurch gekennzeichnet, daß** das optische Reflexionsmittel durch ein Prisma (28) gebildet wird, dessen Spitze (30) an der optischen Achse (24) des Sensors und dem Sen-

EP 0 448 415 B1

sor gegenüberliegend angeordnet ist.

4. Vorrichtung nach Anspruch 3, **dadurch gekennzeichnet, daß** die Stirnflächen des Prismas (28) bezüglich des zweiten Polarisators (32) so ausgerichtet sind, daß nach dem zweiten Durchtritt durch den zweiten Polarisator (32) ein maximaler Lichtfluß erzielt wird.

5. Vorrichtung nach Anspruch 3 oder 4, **dadurch gekennzeichnet, daß** das Reflexionsmittel ein Hohlprisma, welches durch drei reflektierende oder im Inneren metallbeschichtete Flächen gebildet wird, oder ein Vollprisma ist, dessen drei Normalflächen außen metallbeschichtet sind.

6. Vorrichtung nach Anspruch 1 oder 2, **dadurch gekennzeichnet, daß** das Reflexionsmittel aus einer Sammellinse und einem in der Brennebene angeordneten ebenen Spiegel besteht.

7. Vorrichtung nach Anspruch 1 oder 2, **dadurch gekennzeichnet, daß** das Reflexionsmittel eine P/4 oder 3P/4 "SELFOC"-Linse (38) mit einer metallbeschichteten hinteren Fläche (40) ist.

8. Vorrichtung nach einem der vorigen Ansprüche, **dadurch gekennzeichnet, daß** die optische Faser (10) einen einlagigen oder mehrlagigen nichtreflektierenden Überzug aufweist.

9. Vorrichtung nach einem der vorigen Ansprüche, **dadurch gekennzeichnet, daß** die Kollimationslinse (16), die Polarisatoren (18, 32), das empfindliche Element (20) und das Reflexionsmittel (28, 38) in einem metallischen Gehäuse (34) oder einer zylindrischen, aus einem dielektrischen Material gefertigten Hülse, wie beispielsweise einer Kapillarröhre, untergebracht sind

10. Vorrichtung nach einem der vorigen Ansprüche, **dadurch gekennzeichnet, daß** sie einem demodulierenden Interferometer (14) zugeordnet ist, das auf die von dem Sensor erzeugte Modulationsfrequenz (Δ) und auf das Doppelte dieser Frequenz (2Δ) in der Weise abgestimmt ist, daß Oberschwingungen der mittleren Wellenlänge der Quelle (12) ausgeschalten werden.

## Claims

1. A system for remotely measuring a physical magnitude and operating by reflection, the system making use of the principle of encoding light by spectrum modulation, and comprising a source (12) of incoherent light connected by an optical fiber (10) to a sensor comprising a collimator lens (16) and a polarizer (18) disposed between the optical fiber and a bi-refringent sensitive component (20) subjected to the magnitude to be measured, and optical reflection means provided at the end of the sensor facing away from the fiber (10), the system being characterized in that the optical reflection means (28, 38, 40) is of the catadioptric type in which the direction of reflection is parallel to the direction of incidence, and in that a second polarizer (32) is placed between the sensitive component (20) and the reflection means (28, 38, 40), the orientations of the two polarizers (18, 32) being crossed or parallel.

2. A system according to claim 1, characterized in that the light-passing direction of the first polarizer (18) is oriented at 45° to the slow and fast axes of the sensitive component (20) of the sensor.

3. A system according to claim 1 or 2, characterized in that the optical reflection means is constituted by a corner of a cube (28) with the apex (30) thereof being situated on the optical axis (24) of the sensor, with the apex pointing away from the sensor.

4. A system according to claim 3, characterized in that the faces of the corner of a cube (28) are oriented relative to the second polarizer (32) in such a manner as to obtain maximum light flux after the second passage through the second polarizer (32).

5. A system according to claim 3 or 4, characterized in that the reflection means is a corner of a hollow cube formed by three faces that are reflective or are internally metallized, or by a corner of a solid cube whose three perpendicular faces are externally metallized.

6. A system according to claim 1 or 2, characterized in that the reflection means is constituted by a converging lens and a plane mirror situated in the focal plane thereof.

7. A system according to claim 1 or 2, characterized in that the reflection means is a P/4 type or a 3P/4 type Selfoc lens (38) having a metallized rear face (40).

8. A system according to any preceding claim, characterized in that the optical fiber (10) includes a single layer or a multilayer antireflection coating.

9. A system according to any preceding claim, characterized in that the collimator lens (16), the polarizers (18, 32), the sensitive component (20), and the reflection means (28, 38) are all housed in a metal housing (34) or a cylindrical sheath (42) made of dielectric material, such as a capillary tube, for example.

10. A system according to any preceding claim, characterized in that it is associated with a demodulator interferometer (14) tuned to the modulation frequency ($\Delta$) generated by the sensor and to twice the fre-quency ($2\Delta$) so as to eliminate possible drift in the central wavelength of the source (12).

FIG.1

FIG.2

FIG.3

FIG.4